# EUROPÄISCHE PATENTSCHRIFT

(11) **EP 1 570 006 B1**
(45) Veröffentlichungstag und Bekanntmachung des Hinweises auf die Patenterteilung: **30.01.2008**
(21) Anmeldenummer: 03795855.0
(22) Anmeldetag: 28.11.2003
(51) Int. Cl.: C09B 67/20, C09C 3/08, C08K 9/04

(54) **FESTE PIGMENTZUBEREITUNGEN, ENTHALTEND PIGMENTDERIVATE UND OBERFLÄCHENAKTIVE ADDITIVE**
SOLID PIGMENT PREPARATIONS CONTAINING PIGMENT DERIVATIVES AND SURFACE-ACTIVE ADDITIVES
PREPARATIONS DE PIGMENTS SOLIDES, CONTENANT DES DERIVES DE PIGMENT ET DES ADDITIFS TENSIOACTIFS

(30) Priorität: 02.12.2002 DE 10256416
(43) Veröffentlichungstag der Anmeldung: 07.09.2005
(73) Patentinhaber: BASF Aktiengesellschaft, 67056 Ludwigshafen (DE)
(72) Erfinder: KLOPP, Ingo, 67256 Weisenheim (DE); GONZALEZ GOMEZ, Juan Antonio, 67063 Ludwigshafen (DE); MAUTHE, Uwe, 68239 Mannheim (DE); REISACHER, Hansulrich, 67133 Maxdorf (DE); STOHR, Andreas, 67251 Freinsheim (DE)
(74) Vertreter: Isenbruck, Günter
(86) Internationale Anmeldenummer: PCT/EP2003/013464
(87) Internationale Veröffentlichungsnummer: WO 2004/050770

(56) Entgegenhaltungen:
- EP-A- 0 395 988
- EP-A- 0 504 922
- EP-A- 0 636 666
- EP-A- 0 761 770
- EP-A- 1 132 434
- WO-A-02/48268
- DE-A- 4 214 868
- DE-A- 10 204 304
- US-A- 5 082 498
- PATENT ABSTRACTS OF JAPAN Bd. 2000, Nr. 02, 29. Februar 2000 (2000-02-29) & JP 11 323166 A (DAINIPPON INK & CHEM INC), 26. November 1999 (1999-11-26) in der Anmeldung erwähnt

## Beschreibung

Die vorliegende Erfindung betrifft feste Pigmentzubereitungen, enthaltend als wesentliche Bestandteile
(A) 60 bis 85 Gew.-% mindestens eines organischen Pigments,
(B) 0,1 bis 15 Gew.-% mindestens eines Pigmentderivats der allgemeinen Formel Ia 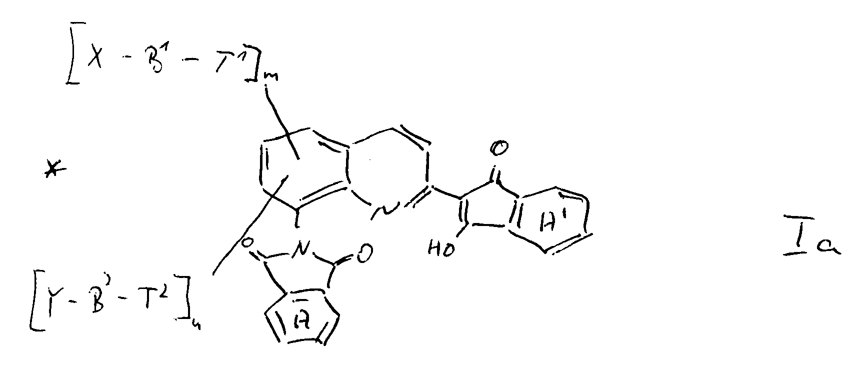 oder Formel Ib

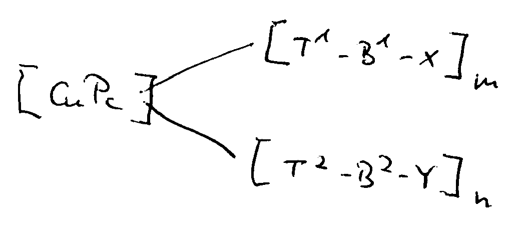

   in der die Variablen folgende Bedeutung haben:
   - T¹, T²: unabhängig voneinander eine chemische Bindung, -CONR¹- oder -SO₂NR¹-;
   - B¹, B²: unabhängig voneinander eine chemische Bindung, C₁-C₈-Alkylen oder Phenylen;
   - X, Y: unabhängig voneinander gleiche oder verschiedene Gruppen -SO₃⁻ Ka⁺;
   - m, n: eine rationale Zahl von 0 bis 3, wobei 1 ≤ m+n ≤ 4 ist;
   - Ka⁺: H⁺, Li⁺, Na⁺, K⁺,N⁺R²R³R⁴R⁵ oder ein Gemisch dieser Kationen;
   - R¹: Wasserstoff; C₁-C₄-Alkyl; Phenyl oder Naphthyl, das jeweils durch C₁-C₁₈-Alkyl substituiert sein kann;
   - R², R³, R⁴, R⁵: unabhängig voneinander Wasserstoff; C₁-C₃₀-Alkyl; C₃-C₃₀-Alkenyl; C₅-C₆-Cycloalkyl, das durch C₁-C₂₄-Alkyl substituiert sein kann; Phenyl oder Naphthyl, das jeweils durch C₁-C₂₄-Alkyl oder C₂-C₂₄-Alkenyl substituiert sein kann; einen Rest der Formel -[CHR⁶-CHR⁷-O]ₓ-R⁸, bei dem die Wiederholungseinheiten -[CHR⁶-CHR⁷-O] für x > 1 variieren können;
   - R⁶, R⁷, R⁸: unabhängig voneinander Wasserstoff oder C₁-C₆-Alkyl;
   - x: eine ganze Zahl ≥ 1,
   - A und A': gleiche oder verschiedene Ringe, die durch jeweils 1 bis 4 Chlor- und/oder Fluoratome substituiert sein können.
(C) 14,9 bis 39,9 Gew.-% mindestens eines oberflächenaktiven Additivs aus der Gruppe der nichtionischen, keine primären Aminogruppen enthaltenden Polyether, ihrer sauren Phosphorsäure-, Phosphonsäure-, Schwefelsäure- und/oder Sulfonsäureester, der Salze dieser Ester und der Alkyl- und Alkylarylsulfonsäuren, ihrer Salze und ihrer Kondensationsprodukte mit Formaldehyd.

Weiterhin betrifft die Erfindung die Herstellung dieser Pigmentzubereitungen und ihre Verwendung zum Einfärben von hochmolekularen organischen und anorganischen Materialien sowie von Kunststoffen.

Zur Pigmentierung von flüssigen Systemen, wie Anstrichmitteln, Lacken, Dispersions- und Druckfarben, werden üblicherweise Pigmentpräparationen eingesetzt, die Wasser, organisches Lösungsmittel oder Mischungen davon enthalten. Neben anionischen, kationischen, nichtionischen oder amphoteren Dispergiermitteln müssen diesen Pigmentpräparationen in der Regel weitere Hilfsmittel, wie Eintrocknungsverhinderer, Mittel zur Erhöhung der Gefrierbeständigkeit, Verdicker und Antihautmittel, zur Stabilisierung zugesetzt werden.

Es bestand Bedarf an neuen Pigmentzubereitungen, die in ihren koloristischen Eigenschaften und der Dispergierbarkeit den flüssigen Präparationen vergleichbar sind, jedoch nicht die genannten Zusätze erfordern und leichter zu handhaben sind. Durch einfaches Trocknen der flüssigen Präparationen können jedoch keine festen Pigmentzuberetiungen erhalten werden, die vergleichbare Anwendungseigenschaften haben.

Die Einfärbung von Kunststoffen erfordert die vollständige Dispergierung des Pigments im Kunststoff, um maximale Farbstärke und Färbewirkung zu erzielen. Bei den üblicherweise eingesetzten Pulverpigmenten ist für eine solche Dispergierung ein entsprechendes Know-how und ein hoher Eintrag an Scherenergie erforderlich, was kostspielig ist. Wenn der Kunststoffverarbeiter nicht über dieses Know-how sowie die erforderlichen aufwendigen und teuren Dispergiergeräte verfügt, weisen die eingefärbten Kunststoffe oftmals sogenannte Pigmentstippen, d.h. nicht ausdispergierte Pigmentagglomerate, auf, sie sind schlecht verspinnbar und/oder besitzen hohe Druckfilterwerte. Deshalb wird oftmals auf sogenannte Masterbatches zurückgegriffen. Das sind üblicherweise feste, konzentrierte Pigmentpräparationen in einer schmelzbaren, bei Raumtemperatur festen Kunststoffmatrix, in der das pulverförmige Pigment ausdispergiert und damit feinverteilt vorliegt, d.h. die zur Dispergierung des Pulverpigments erforderliche Energie wurde bereits bei der Herstellung des Masterbatches aufgebracht.

Es sind eine Reihe von festen Pigmentzubereitungen, insbesondere solche auf der Basis von Kupferphthalocyaninpigmenten (CuPc-Pigmenten) bekannt, die neben dem Pigment ein Derivat des Pigments enthalten. Sie unterscheiden sich jedoch aufgrund ihrer weiteren Zusammensetzung von den erfindungsgemäßen Pigmentzubereitungen.

So enthalten die in der WO-A-02/40596 und der JP-A-323 166/1999 beschriebenen CuPc-Pigmentzubereitungen kein freies, d.h. nicht als Salz des CuPc-Pigmentderivats vorliegendes, nichtionisches oberflächenaktives Additiv bzw. kein zusätzliches anionisches oberflächenaktives Additiv.

Die aus der DE-A-42 14 868 und der WO-A-02/48268 bekannten CuPc-Pigmentzubereitungen sowie Diketopyrrolopyrrol- und Indanthronpigmentzubereitungen enthalten keine nichtionischen oder anionischen, sondern nur kationische oberflächenaktive Mittel, die mit dem Pigmentderivat umgesetzt sind.

Die CuPc-Pigmentzubereitungen aus der EP-A-621 319 weisen als wesentlichen Bestandteil ein anorganisches oder organisches Salz auf, oberflächenaktive Mittel sind nicht vorhanden.

Bei den in der US-A-4 726 847 beschriebenen CuPc-Pigmentzubereitungen werden das CuPc-Pigmentderivat und das enthaltene anionische Tensid zum Bariumsalz verlackt.

Die aus der EP-A-761 770 bekannten CuPc-Pigmentzubereitungen enthalten lediglich kationische oberflächenaktive Mittel sowie zusätzlich Aluminiumresinate als wesentliche Bestandteile.

In der WO-A-02/64680 werden Zubereitungen verschiedener organischer Pigmente offenbart, diese enthalten jedoch keine oberflächenaktiven Mittel. Dies gilt auch für die in der
EP-A-504 922 und der DE-A-39 26 564 offenbarten Zubereitungen von Dioxazin- bzw. Perylenpigmenten.

In der EP-A-636 666 und der DE-A-43 21 693 werden Perylen- und Indanthronpigmentzubereitungen beschrieben, die ein Perylen- bzw. ein Diaminoanthrachinonderivat als Pigmentderivat sowie ein nichtionisches oberflächenaktives Additiv enthalten. Der Gesamtgehalt an eingesetztem Additiv ist jedoch deutlich geringer als bei den erfindungsgemäßen Pigmentzubereitungen.

Alle diese bekannten Pigmentzubereitungen weisen den Nachteil auf, daß sie nicht durch einfaches Einrühren ("Stir-in") in flüssigen Anwendungsmedien verteilbar sind.

Weiterhin werden in den nicht vorveröffentlichten DE-A-102 27 657, 102 28 199 und 102 33 081 feste Pigmentzubereitungen in Granulatform beschrieben, die zwar nichtionische und/oder anionische oberflächenaktive Mittel, jedoch keine Pigmentderivate enthalten.

Der Erfindung lag die Aufgabe zugrunde, feste Pigmentzubereitungen bereitzustellen, die sich durch insgesamt vorteilhafte Anwendungseigenschaften, insbesondere hohe Farbstärke und besonders leichte Dispergierbarkeit in Anwendungsmedien verschiedenster Art, vor allem Stir-in-Verhalten in flüssigen Anwendungsmedien, auszeichnen.

Demgemäß wurden feste Pigmentzubereitungen gefunden, die als wesentliche Bestandteile
(A) 60 bis 85 Gew.-% mindestens eines organischen Pigments,
(B) 0,1 bis 15 Gew.-% mindestens eines Pigmentderivats der allgemeinen Formel Ia 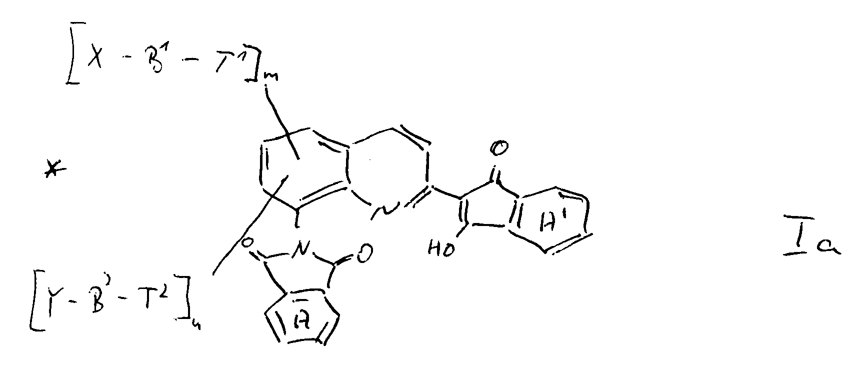 oder Formel Ib 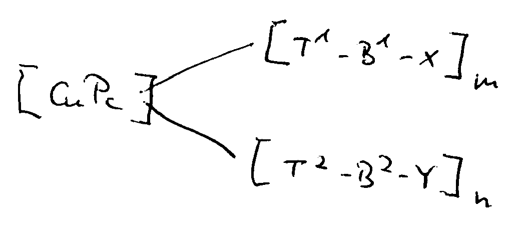 in der die Variablen folgende Bedeutung haben:
   - T¹, T²: unabhängig voneinander eine chemische Bindung, -CONR¹- oder -SO₂NR¹-;
   - B¹, B²: unabhängig voneinander eine chemische Bindung, C₁-C₈-Alkylen oder Phenylen;
   - X, Y: unabhängig voneinander gleiche oder verschiedene Gruppen -SO₃⁻ Ka⁺;
   - m, n: eine rationale Zahl von 0 bis 3, wobei 1 ≤ m+n ≤ 4 ist;
   - Ka⁺: H⁺, Li⁺, Na⁺, K⁺,N⁺R²R³R⁴R⁵ oder ein Gemisch dieser Kationen;
   - R¹: Wasserstoff; C₁-C₄-Alkyl; Phenyl oder Naphthyl, das jeweils durch C₁-C₁₈-Alkyl substituiert sein kann;
   - R², R³, R⁴, R⁵: unabhängig voneinander Wasserstoff; C₁-C₃₀-Alkyl; C₃-C₃₀-Alkenyl; C₅-C₆-Cycloalkyl, das durch C₁-C₂₄-Alkyl substituiert sein kann; Phenyl oder Naphthyl, das jeweils durch C₁-C₂₄-Alkyl oder C₂-C₂₄-Alkenyl substituiert sein kann; einen Rest der Formel -[CHR⁶-CHR⁷-O]ₓ-R⁸, bei dem die Wiederholungseinheiten -[CHR⁶-CHR⁷-O] für x > 1 variieren können;
   - R⁶, R⁷, R⁸: unabhängig voneinander Wasserstoff oder C₁-C₆-Alkyl;
   - x: eine ganze Zahl ≥ 1,
   - A und A': gleiche oder verschiedene Ringe, die durch jeweils 1 bis 4 Chlor- und/oder Fluoratome substituiert sein können.
(C) 14,9 bis 39,9 Gew.-% mindestens eines oberflächenaktiven Additivs aus der Gruppe der nichtionischen, keine primären Aminogruppen enthaltenden Polyether, ihrer sauren Phosphorsäure-, Phosphonsäure-, Schwefelsäure- und/oder Sulfonsäureester, der Salze dieser Ester und der Alkyl- und Alkylarylsulfonsäuren, ihrer Salze und ihrer Kondensationsprodukte mit Formaldehyd.
enthalten.

Außerdem wurde ein Verfahren zur Herstellung der Pigmentzubereitungen gefunden, das dadurch gekennzeichnet ist, daß man das Pigment (A) zunächst in wäßriger, zumindest einen Teil des Additivs (C) enthaltender Suspension, gewünschtenfalls nach Zugabe eines Teils oder der Gesamtmenge Pigmentderivat (B) sowie gewünschtenfalls vorheriger oder nachheriger Neutralisation der Suspension mit einer Base, einer Naßzerkleinerung unterwirft und die Suspension dann, gegebenenfalls nach Zugabe der restlichen Menge Pigmentderivat (B) und Additiv (C), trocknet.

Weiterhin wurde ein Verfahren zur Einfärbung von hochmolekularen organischen und anorganischen Materialien gefunden, das dadurch gekennzeichnet ist, daß man die Pigmentzubereitungen durch Einrühren oder Schütteln in diese Materialien einträgt.

Schließlich wurde ein Verfahren zur Einfärbung von Kunststoffen gefunden, das dadurch gekennzeichnet ist, daß man die Pigmentzubereitungen durch Extrudieren, Walzen, Kneten oder Mahlen in die Kunststoffe einarbeitet.

Die erfindungsgemäßen Pigmentzubereitungen enthalten als wesentliche Bestandteile Pigment (A), Pigmentderivat (B) und wasserlösliches oberflächenaktives Additiv (C).

Als Komponente (A) enthalten die erfindungsgemäßen Pigmentzubereitungen mindestens ein organisches Pigment. Selbstverständlich können auch Mischungen verschiedener organischer Pigmente enthalten sein. Prinzipiell können auch Mischungen organischer mit anorganischen Pigmenten, insbesondere mit anorganischen Weißpigmenten oder Füllstoffen, enthalten sein.

Die Pigmente (A) liegen in feinteiliger Form vor. Sie haben dementsprechend im allgemeinen mittlere Teilchengrößen von 0,01 bis 5 µm, insbesondere 0,05 bis 3 µm.

Bei den organischen Pigmenten handelt es sich üblicherweise um organische Bunt - und Schwarzpigmente (Farbpigmente). Anorganische Pigmente können ebenfalls Farbpigmente sowie Glanzpigmente und die üblicherweise als Füllstoffe eingesetzten anorganischen Pigmente sein.

Im folgenden seien als Beispiele für geeignete organische Farbpigmente genannt:

| | |
|---|---|
| - Monoazopigmente: | C.I. Pigment Brown 25; |
| | C.I. Pigment Orange 5, 13, 36, 38, 64 und 67; |
| | C.I. Pigment Red 1, 2, 3, 4, 5, 8, 9, 12, 17, 22, 23, 31, 48:1, |
| | 48:2, 48:3, 48:4, 49, 49:1, 51:1, 52:1, 52:2, 53, 53:1, 53:3, |
| | 57:1, 58:2, 58:4, 63, 112, 146, 148, 170, 175, 184, 185, 187, |
| | 191:1, 208, 210, 245, 247 und 251; |
| | C.I. Pigment Yellow 1, 3, 62, 65, 73, 74, 97, 120, 151, 154, |
| | 168, 181, 183 und 191; |
| | C.I. Pigment Violet 32; |
| | |
| - Disazopigmente: | C.I. Pigment Orange 16, 34, 44 und 72; |
| | C.I. Pigment Yellow 12, 13, 14, 16, 17, 81, 83, 106, 113, 126, |
| | 127, 155, 174, 176, 180 und 188; |
| | |
| - Disazokondensationspigmente: | C.I. Pigment Yellow 93, 95 und 128; |
| | C.I. Pigment Red 144, 166, 214, 220, 221, 242 und 262; |
| | C.I. Pigment Brown 23 und 41; |
| | |
| - Anthanthronpigmente: | C.I. Pigment Red 168; |
| | |
| - Anthrachinonpigmente: | C.I. Pigment Yellow 147, 177 und 199; |
| | C.I. Pigment Violet 31; |
| | |
| - Anthrapyrimidinpigmente: | C.I. Pigment Yellow 108; |
| | |
| - Chinacridonpigmente: | C.I. Pigment Orange 48 und 49; |
| | C.I. Pigment Red 122, 202, 206 und 209; |
| | C.I. Pigment Violet 19; |
| | |
| - Chinophthalonpigmente: | C.I. Pigment Yellow 138; |
| | |
| - Diketopyrrolopyrrolpigmente: | C.I. Pigment Orange 71, 73 und 81; |
| | C.I. Pigment Red 254, 255, 264, 270 und 272; |
| | |
| - Dioxazinpigmente: | C.I. Pigment Violet 23 und 37; |
| | C.I. Pigment Blue 80; |
| | |
| - Flavanthronpigmente: | C.I. Pigment Yellow 24; |
| | |
| - Indanthronpigmente: | C.I. Pigment Blue 60 und 64; |
| | |
| - Isoindolinpigmente: | C.I. Pigmente Orange 61 und 69; |
| | C.I. Pigment Red 260; |
| | C.I. Pigment Yellow 139 und 185; |
| | |
| - Isoindolinonpigmente: | C.I. Pigment Yellow 109, 110 und 173; |
| | |
| - Isoviolanthronpigmente: | C.I. Pigment Violet 31; |
| | |
| - Metallkomplexpigmente: | C.I. Pigment Red 257; |
| | C.I. Pigment Yellow 117, 129, 150, 153 und 177; |
| | C.I. Pigment Green 8; |
| | |
| - Perinonpigmente: | C.I. Pigment Orange 43; |
| | C.I. Pigment Red 194; |
| | |
| - Perylenpigmente: | C.I. Pigment Black 31 und 32; |
| | C.I. Pigment Red 123, 149, 178, 179, 190 und 224; |
| | C.I. Pigment Violet 29; |
| | |
| - Phthalocyaninpigmente: | C.I. Pigment Blue 15, 15:1, 15:2, 15:3, 15:4, 15:6 und 16; |
| | C.I. Pigment Green 7 und 36; |
| | |
| - Pyranthronpigmente: | C.I. Pigment Orange 51; |
| | C.I. Pigment Red 216; |
| | |
| - Pyrazolochinazolonpigmente: | C.I. Pigment Orange 67; |
| | C.I. Pigment Red 251; |
| | |
| - Thioindigopigmente: | C.I. Pigment Red 88 und 181; |
| | C.I. Pigment Violet 38; |
| | |
| - Triarylcarboniumpigmente: | C.I. Pigment Blue 1, 61 und 62; |
| | C.I. Pigment Green 1; |
| | C.I. Pigment Red 81, 81:1 und 169; |
| | C.I. Pigment Violet 1, 2, 3 und 27; |
| | |
| - C.I. Pigment Black 1 (Anilinschwarz); | |
| | |
| - C.I. Pigment Yellow 101 (Aldazingelb); | |
| | |
| - C.I. Pigment Brown 22. | |

Geeignete anorganische Farbpigmente sind z.B.:

| | |
|---|---|
| - Weißpigmente: | Titandioxid (C.I. Pigment White 6), Zinkweiß, Farbenzinkoxid; Zinksulfid, Lithopone; |
| - Schwarzpigmente: | Eisenoxidschwarz (C.I. Pigment Black), Eisen-Mangan-Schwarz (C.I. Pigment Black 27); Ruß (C.I. Pigment Black 7); |
| | |
| - Buntpigmente: | Chromoxid, Chromoxidhydratgrün; Chromgrün (C.I. Pigment Green 48); Cobaltgrün (C.I. Pigment Green 50); Ultramaringrün; |
| | |
| | Kobaltblau (C.I. Pigment Blue 28 und 26; C.I. Pigment Blue 72); Ultramarinblau; Manganblau; |
| | |
| | Ultramarinviolett; Kobalt- und Manganviolett; |
| | |
| | Eisenoxidrot (C.I. Pigment Red 101); Cadmiumsulfoselenid (C.I. Pigment Red 108); Cersulfid (C.I. Pigment Red 265); Molybdatrot (C.I. Pigment Red 104); Ultramarinrot; |
| | |
| | Eisenoxidbraun (C.I. Pigment Brown 6 und 7), Mischbraun, Spinell- und Korundphasen (C.I. Pigment Brown 29, 31, 33, 34, 35, 37, 39 und 40), Chromtitangelb (C.I. Pigment Brown 24), Chromorange; |
| | |
| | Cersulfid (C.I. Pigment Orange 75); |
| | |
| | Eisenoxidgelb (C.I. Pigment Yellow 42); Nickeltitangelb (C.I. Pigment Yellow 53; C.I. Pigment Yellow 157, 158, 159, 160, 161, 162, 163, 164 und 189); Chromtitangelb; Spinellphasen (C.I. Pigment Yellow 119); Cadmiumsulfid und Cadmiumzinksulfid (C.I. Pigment Yellow 37 und 35); Chromgelb (C.I. Pigment Yellow 34); Bismutvanadat (C.I. Pig-ment Yellow 184). |

Als Beispiele für üblicherweise als Füllstoffe eingesetzte anorganische Pigmente seien transparentes Siliciumdioxid, Quarzmehl, Aluminiumoxid, Aluminiumhydroxid, natürliche Glimmer, natürliche und gefällte Kreide und Bariumsulfat genannt.

Bei den Glanzpigmenten handelt es sich um einphasig oder mehrphasig aufgebaute plättchenförmige Pigmente, deren Farbenspiel durch das Zusammenspiel von Interferenz-, Reflexions- und Absorptionsphänomenen geprägt ist. Als Beispiele seien Aluminiumplättchen und ein- oder mehrfach, insbesondere mit Metalloxidn beschichtete Aluminium-, Eisenoxid- und Glimmerplättchen genannt.

Die erfindungsgemäßen Pigmentzubereitungen enthalten 60 bis 85 Gew.-%, vorzugsweise 70 bis 85 Gew.-%, des Pigments (A).

Als Komponente (B) enthalten die erfindungsgemäßen festen Pigmentzubereitungen ein Pigmentderivat der eingangs definierten Formeln Ia oder Ib.

Die Pigmentderivate Ia oder Ib basieren auf dem Grundkörper eines organischen Chinophthalon- oder Phthalocyaninpigment, der durch Sulfonsäuregruppen funktionalisiert ist, die entweder direkt oder über Brückenglieder an den Grundkörper gebunden sind.

Das in der jeweiligen Pigmentzubereitung als Komponente (B) eingesetzte Pigmentderivat Ia oder Ib kann denselben Pigmentgrundkörper aufweisen wie das organische Pigment (A). Die Kombinationsmöglichkeiten werden dabei dadurch begrenzt, daß das farbige Pigmentderivat (B) den koloristischen Eindruck des Pigments (A) im Anwendungsmedium nicht unerwünscht beeinflussen sollte.

Das Pigmentderivat Ia eignet sich besonders für die Kombination mit Gelb-, Orange- und Rotpigmenten, die phthafocyaninbasierenden Pigmentderivate Pigmentderivate Ib sind insbesondere für die Kombination mit Blau-, Grün-, Violett- und Schwarzpigmenten geeignet.

Vorzugsweise enthalten die Pigmentderivate Ia oder Ib die Sulfonsäure- und/oder Carbonsäuregruppen X bzw. Y direkt an den Pigmentgrundkörper gebunden, d.h. T¹ und B¹ sowie T² und B² bedeuten alle bevorzugt eine chemische Bindung.

T¹ und T² können jedoch auch Brückenglieder der Formel -CONR¹- oder -SO₂NR¹- (R¹: Wasserstoff; C₁-C₄-Alkyl; Naphthyl oder insbesondere Phenyl, das jeweils durch C₁-C₁₈-Alkyl substituiert sein kann, vorzugsweise aber unsubstituiert ist) bedeuten. Beispiele für besonders geeignete Brückenglieder T¹ und T² sind -CONH-, SO₂NH-, -CON(CH₃)- und -SO₂N(CH₃)-.

Ebenso können B¹ und B² unverzweigte oder verzweigte C₁-C₈-Alkylenreste oder Phenylenreste bedeuten. Beispielhaft seien genannt: Methylen, 1,1- und 1,2-Ethylen, 1,1-, 1,2- und 1,3-Propylen und 1,4-, 1,3- und 1,2-Phenylen.

Geeignete Kombinationen der Brückenglieder T und B sind z.B. -CONH-CH₂-, -CON(CH₃)-CH₂-, -CONH-C₂H₄-, -CONH-CH(CH₃)-, -SO₂NH-CH₂-, -SO₂N(CH₃)-CH₂-, -SO₂NH-C₂H₄-, -SO₂NH-CH(CH₃)-, -CONH-1,4-C₆H₄- und -SO₂NH-1,4-C₆H₄-.

Die Sulfonsäure- und/oder Carbonsäuregruppen X bzw. Y können als freie Säure oder als Salz (Ka⁺: Li⁺, Na⁺, K⁺ oder N⁺R²R³R⁴R⁵) vorliegen.

Die Ammoniumsalze können dabei von unsubstituierten Ammoniumionen gebildet werden, vorzugsweise ist jedoch mindestens einer der Reste R², R³, R⁴ und R⁵ von Wasserstoff verschieden.

Geeignete aliphatische Reste R², R³, R⁴ und R⁵ sind dabei C₁-C₃₀-Alkyl- und C₃-C₃₀-Alkenylreste, die unverzweigt oder verzweigt sein können, und C₅-C₆-Cycloalkylreste, die durch C₁-C₂₄-Alkyl, vorzugsweise C₁-C₁₈-Alkyl, substituiert sein können. Als aromatische Reste eignen sich Phenyl und Naphthyl, die jeweils durch C₁-C₂₄-Alkyl oder durch C₂-C₂₄-Alkenyl, insbesondere C,-C₁₈-Alkyl oder C₂-C₁₈-Alkenyl, substituiert sein können. Weiterhin können die Reste R², R³, R⁴ und R⁵ auch Polyalkylenoxyreste der Formel -[CHR⁶-CHR⁷-O]ₓ-R⁸ (R⁶, R⁷ und R⁸: unabhängig voneinander Wasserstoff, C₁-C₆-Alkyl; x ≥ 1) sein. Wenn x > 1 ist, kann es sich um homopolymere Reste, also z.B. reine Polyethylenoxy- oder reine Polypropylenoxyreste, oder um copolymere, die verschiedenen Alkylenoxyeinheiten insbesondere blockweise oder auch statistisch enthaltende Reste, z.B. Polyethylenoxy/Polypropylenoxyreste, handeln.

Bevorzugt sind die aromatischen und besonders bevorzugt die nichtcyclischen aliphatischen Reste R², R³, R⁴ und R⁵.

Ganz besonders geeignete Ammoniumsalze sind Mono-C₈-C₃₀-alkyl- oder -alkenylammoniumsalze, z.B. Lauryl-, Stearyl-, Oleyl- und Talgfettalkylammoniumsalze, sowie quaternierte Ammoniumsalze, die insgesamt 24 bis 42 C-Atome enthalten, wobei mindestens ein, bevorzugt zwei der Alkyl- und/oder Alkenylreste mindestens 8, vorzugsweise 12, besonders bevorzugt 12 bis 20 C-Atome aufweisen, z.B. Dimethyldidodecyl-, Dimethyldioleyl- und Dimethyldistearylammoniumsalze.

Vorzugsweise liegen die Sulfonsäuregruppen X bzw. Y in den Pigmentderivaten Ia oder Ib nicht in freier Form vor. Wenn sie nicht schon von vornherein zum Salz umgesetzt sind, erfolgt die Salzbildung, insbesondere die Bildung des Natriumsalzes, in der Regel bei der Herstellung der erfindungsgemäßen Pigmentzubereitungen, die in diesem Fall vorzugsweise einen Neutralisationsschritt umfaßt. Hat keine oder nur unvollständige Salzbildung stattgefunden, so können die Säuregruppen bei Einsatz eines nichtionischen oberflächenaktiven Additivs (C), das ein basisches Zentrum, z.B. ein Stickstoffatom, aufweist, selbstverständlich auch mit diesem Additiv unter Salzbildung reagieren. Die erfindungsgemäßen Pigmentzubereitungen enthalten jedoch auch in diesem Fall noch freies Additiv (C), vorzugsweise mindestens 5 Gew.-% freies Additiv (C). Ist das Additiv (C) nicht zur Salzbildung befähigt, können die Sulfonsäure- und/oder Carbonsäuregruppen auch als freie Säure vorliegen.

Häufig werden also Mischungen verschiedener Salze vorliegen. Wenn dies der Fall ist, sollten die bevorzugten Natrium- und/oder Ammoniumsalze (insbesondere die oben explizit genannten Ammoniumsalze) zumindest einen hohen Anteil an diesen Mischungen ausmachen.

Die Pigmentderivate Ia oder Ib können 1 bis 4 Säuregruppen enthalten. Abhängig vom Pigmentgrundkörper P, z.B. bei einem Phthalocyaninrest P, können die Pigmentderivate Ia oder Ib statistische Mischungen verschieden stark substituierter Moleküle darstellen, so daß der Mittelwert der Summe m + n eine gebrochene Zahl sein kann.

Vorzugsweise enthalten die Pigmentderivate Ia oder Ib ausschließlich Sulfonsäuregruppen. Dabei hat sich ein Substitutionsgrad (m + n) von 1 bis 3, vor allem 1 bis 2, als besonders vorteilhaft erwiesen. Liegen die Sulfonsäuregruppen in Form eines Ammoniumsalzes (m) und gegebenenfalls Natriumsalzes oder als freie Säure (n) vor, so beträgt m vorzugsweise 1 bis 1,8 und n 0 bis 0,2.

Als Beispiele für besonders geeignete Pigmentderivate I seien genannt:
Chinophthalonsulfonsäuren der Formel Ia' 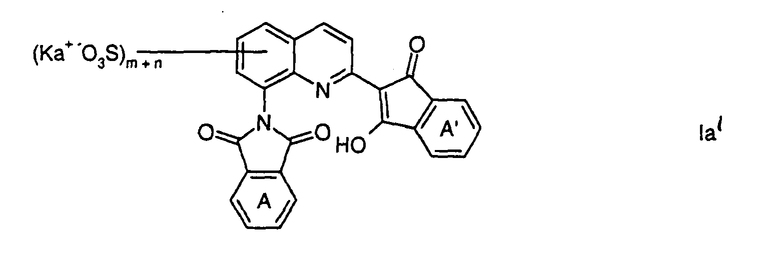
Kupferphthalocyaninsulfonsäuren der Formel Ib'

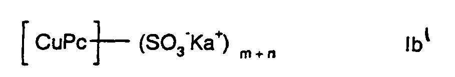

Die Variablen Ka⁺ und m + n haben dabei die eingangs definierte Bedeutung, wobei Ka vorzugsweise für Na⁺ oder N⁺R²H³R⁴R⁵ (insbesondere mit den oben ausgeführten bevorzugten Kombinationen der Reste R² bis R⁵) steht. Die Summe m + n bedeutet bei den Verbindungen Ia und Ic insbesondere 1, wobei die Sulfonsäuregruppen bei den Verbindungen Ia bevorzugt in 6. Position und bei den Verbindungen Ic bevorzugt in 9-Position steht.

Die Ringe A und A' in Formel Ia können gleich oder verschieden sein und durch jeweils 1 bis 4 Chlor-und/oder Fluoratome substituiert sein. Vorzugsweise tragen beide Ringe 4 Chloratome.

Ganz besonders bevorzugte Komponenten (B) sind die Pigmentderivate Ia' und Ib' mit den als bevorzugt angegebenen Bedeutungen der Variablen, wobei die Pigmentderivate Ia' vorzugsweise als Natriumsalze vorliegen und die Pigmentderivate Ib sowohl als Natrium- als auch als Ammoniumsalze vorliegen können.

Die Pigmentderivate I sind bekannt und können nach bekannten Verfahren hergestellt werden.

Die erfindungsgemäßen Pigmentzubereitungen enthalten 0,1 bis 15 Gew.-%, insbesondere 0,5 bis 10 Gew.-%, der Komponente (B). Handelt es sich bei der Komponente (B) um die Pigmentderivate Ia, so beträgt ihr Anteil vorzugsweise 0,1 bis 5 Gew.-%, vor allem 0,5 bis 4 Gew.-%. Bei den Pigmentderivaten Ib sind Mengen von 2 bis 10 Gew.-%, insbesondere von 3 bis 8 Gew.-%, bevorzugt. Der Gehalt an Pigmentderivaten Ic liegt vorzugsweise bei 0,1 bis 5 Gew.-5, vor allem bei 0,5 bis 3 Gew.-%.

Als Komponente (C) enthalten die erfindungsgemäßen Pigmentzubereitungen mindestens ein oberflächenaktives Additiv. Dabei kann es sich um ein nichtionisches Additiv auf der Basis von Polyethern, die keine primären Aminogruppen enthalten, oder um ein anionisches Additiv auf der Basis der sauren Phosphorsäure-, Phosphonsäure-, Schwefelsäure- und/oder Sulfonsäureester dieser Polyether und der Salze dieser Ester sowie von Alkyl- und Alkylarylsulfonsäuren, ihren Salzen und ihren Kondensationsprodukten mit Formaldehyd handeln. Selbstverständlich können auch Mischungen verschiedener nichtionischer oberflächenaktiver Additive, Mischungen verschiedener anionischer oberflächenaktiver Additive oder auch Mischungen von nichtionischen und anionischen oberflächenaktiven Additiven in den erfindungsgemäßen Pigmentzubereitungen enthalten sein.

Insbesondere für den Einsatz in wasserbasierenden Anwendungsmedien sind wasserlösliche Additive (C) besonders geeignet. Dabei sind Additive (C), von denen mindestens 5 gew.-%ige, vor allem mindestens 10 gew.-%ige wäßrige Lösungen hergestellt werden können, bevorzugt.

Bei den den Additiven (C) zugrundeliegenden Polyethern handelt es sich insbesondere um Polyalkylenoxide, insbesondere Alkylenoxidblockcopolymere, oder Umsetzungsprodukte von Alkylenoxiden mit Alkoholen, Aminen, aliphatischen Carbonsäuren und Carbonsäureamiden. Erfindungsgemäß soll dabei unter dem Begriff Alkylenoxid auch arylsubstituiertes Alkylenoxid, insbesondere phenylsubstituiertes Ethylenoxid, verstanden werden.

Neben den ungemischten Polyalkylenoxiden, bevorzugt C₂-C₄-Alkylenoxiden und phenylsubstituierten C₂-C₄-Alkylenoxiden, insbesondere Polyethylenoxiden, Polypropylenoxiden und Poly-(phenylethylenoxiden), sind vor allem Blockcopolymere, insbesondere Polypropylenoxid- und Polyethylenoxidblöcke oder Poly(phenylethylenoxid)- und Polyethylenoxidblöcke aufweisende Polymere, und auch statistische Copolymere dieser Alkylenoxide geeignet.

Diese Polyalkylenoxide können durch Polyaddition der Alkylenoxide an Startermoleküle, wie an gesättigte oder ungesättigte aliphatische und aromatische Alkohole, gesättigte oder ungesättigte aliphatische und aromatische Amine, gesättigte oder ungesättigte aliphatische Carbonsäuren und Carbonsäureamide hergestellt werden. Üblicherweise werden 1 bis 300 mol, bevorzugt 3 bis 150 mol, Alkylenoxid je mol Startermolekül eingesetzt.

Geeignete aliphatische Alkohole enthalten dabei in der Regel 6 bis 26 C-Atome, bevorzugt 8 bis 18 C-Atome, und können unverzweigt, verzweigt oder cyclisch aufgebaut sein. Als Beispiele seien Octanol, Nonanol, Decanol, Isodecanol, Undecanol, Dodecanol, 2-Butyloctanol, Tridecanol, Isotridecanol, Tetradecanol, Pentadecanol, Hexadecanol (Cetylalkohol), 2-Hexyldecanol, Heptadecanol, Octadecanol (Stearylalkohol), 2-Heptylundecanol, 2-Octyldecanol, 2-Nonyltridecanol, 2-Decyltetradecanol, Oleylalkohol und 9-Octadecenol sowie auch Mischungen dieser Alkohole, wie C₈/C₁₀-, C₁₃/C₁₅- und C₁₆/C₁₈-Alkohole, und Cyclopentanol und Cyclohexanol genannt. Von besonderem Interesse sind die gesättigten und ungesättigten Fettalkohole, die durch Fettspaltung und Reduktion aus natürlichen Rohstoffen gewonnen werden, und die synthetischen Fettalkohole aus der Oxosynthese. Die Alkylenoxidaddukte an diese Alkohole weisen üblicherweise mittlere Molekulargewichte Mₙ von 200 bis 5000 auf.

Als Beispiele für die obengenannten aromatischen Alkohole seien neben und α- und β-Naphthol und deren C₁-C₄-Alkylderivaten insbesondere Phenol, seine C₁-C₁₂-Alkylderivate, wie Hexylphenol, Heptylphenol, Octylphenol, Nonylphenol, Isononylphenol, Undecylphenol, Dodecylphenol, Di- und Tributylphenol und Dinonylphenol, und seine Arylalkylderivate, vor allem seine Hydroxyphenylmethylderivate, deren Methylgruppe durch zwei C₁-C₈-Alkylreste substituiert sein kann, vorzugsweise jedoch 2 Methylreste trägt (Bisphenol A).

Geeignete aliphatische Amine entsprechen den oben aufgeführten aliphatischen Alkoholen. Besondere Bedeutung haben auch hier die gesättigten und ungesättigten Fettamine, die vorzugsweise 14 bis 20 C-Atome aufweisen. Als aromatische Amine seien beispielsweise Anilin und seine Derivate genannt.

Als aliphatische Carbonsäuren eignen sich insbesondere gesättigte und ungesättigte Fettsäuren, die bevorzugt 14 bis 20 C-Atome enthalten, und hydrierte, teilhydrierte und unhydrierte Harzsäuren sowie auch mehrwertige Carbonsäuren, z.B. Dicarbonsäuren, wie Maleinsäure.

Geeignete Carbonsäureamide leiten sich von diesen Carbonsäuren ab.

Neben den Alkylenoxidaddukten an die einwertigen Alkohole und Amine sind die Alkylenoxidaddukte an mindestens bifunktionelle Amine und Alkohole von ganz besonderem Interesse.

Als mindestens bifunktionelle Amine sind zwei- bis fünfwertige Amine bevorzugt, die insbesondere der Formel H₂N-(R¹⁰-NR¹¹)ₚ-H (R¹⁰: C₂-C₆-Alkylen; R¹¹: Wasserstoff oder C₁-C₆-Alkyl; p: 1 bis 5) entsprechen. Im einzelnen seien beispielhaft genannt: Ethylendiamin, Diethylentriamin, Triethylentetramin, Tetraethylenpentamin, Propylendiamin-1,3, Dipropylentriamin, 3-Amino-1-ethylenaminopropan, Hexamethylendiamin, Dihexamethylentriamin, 1,6-Bis-(3-aminopropylamino)hexan und N-Methyldipropylentriamin, wobei Hexamethylendiamin und Diethylentriamin besonders bevorzugt sind und Ethylendiamin ganz besonders bevorzugt ist.

Vorzugsweise werden diese Amine zunächst mit Propylenoxid und anschließend mit Ethylenoxid umgesetzt. Der Gehalt der Blockcopolymere an Ethylenoxid liegt üblicherweise bei etwa 10 bis 90 Gew.-%.

Die Blockcopolymere auf Basis mehrwertiger Amine weisen in der Regel mittlere Molekulargewichte Mₙ von 1000 bis 40 000, vorzugsweise von 1500 bis 30 000, auf.

Als mindestens bifunktionelle Alkohole sind zwei- bis fünfwertige Alkohole bevorzugt. Beispielsweise seien C₂-C₆-Alkylenglykole und die entsprechenden Di- und Polyalkylenglykole, wie Ethylenglykol, Propylenglykol-1,2 und -1,3, Butylenglykol-1,2 und -1,4, Hexylenglykol-1,6, Dipropylenglykol und Polyethylenglykol, Glycerin und Pentaerythrit genannt, wobei Ethylenglykol und Polyethylenglykol besonders bevorzugt und Propylenglykol und Dipropylenglykol ganz besonders bevorzugt sind.

Besonders bevorzugte Alkylenoxidaddukte an mindestens bifunktionelle Alkohole weisen einen zentralen Polypropylenoxidblock auf, gehen also von einem Propylenglykol oder Polypropylenglykol aus, das zunächst mit weiterem Propylenoxid und dann mit Ethylenoxid umgesetzt wird. Der Gehalt der Blockcopolymere an Ethylenoxid liegt üblicherweise bei 10 bis 90 Gew.-%.

Die Blockcopolymere auf Basis mehrwertiger Alkohole weisen im allgemeinen mittlere Molekulargewichte Mₙ von 1000 bis 20 000, vorzugsweise von 1000 bis 15 000, auf.

Derartige Alkylenoxidblockcopolymere sind bekannt und im Handel z.B. unter den Namen Tetronic^{®} und Pluronic^{®} (BASF) erhältlich.

Eine wichtige Gruppe anionischer oberflächenaktiver Additive (C) bilden die Phosphate, Phosphonate, Sulfate und Sulfonate der nichtionischen Polyether, wobei die Phosphate und Sulfate bevorzugt sind.

Diese können durch Umsetzung mit Phosphorsäure, Phosphorpentoxid und Phosphonsäure bzw. Schwefelsäure und Sulfonsäure in die Phosphorsäuremono- oder -diester und Phosphonsäureester bzw. die Schwefelsäuremonoester und Sulfonsäureester überführt werden. Diese sauren Ester liegen bevorzugt in Form wasserlöslicher Salze, insbesondere als Alkalimetallsalze, vor allem Natriumsalze, und Ammoniumsalze vor, sie können jedoch auch in Form der freien Säuren eingesetzt werden.

Bevorzugte Phosphate und Phosphonate leiten sich vor allem von alkoxylierten, insbesondere ethoxylierten, Fett- und Oxoalkoholen, Alkylphenolen, Fettaminen, Fettsäuren und Harzsäuren ab, bevorzugte Sulfate und Sulfonate basieren insbesondere auf alkoxylierten, vor allem ethoxylierten, Fettalkoholen, Alkylphenolen und Aminen, auch mehrwertigen Aminen.

Eine weitere wichtige Gruppe anionischer oberflächenaktiver Additive (C) bilden aromatische Sulfonate, wie p-C₈-C₂₀-Alkylbenzolsulfonate, Di-(C₁-C₈-alkyl)naphthalinsulfonate und Kondensationsprodukte von Naphthalinsulfonsäuren mit Formaldehyd, und aliphatische Sulfonate, wie C₁₂-C₁₈-Alkansulfonate, α-Sulfofettsäure-C₂-C₈-alkylester, Sulfobernsteinsäureester und Alkoxy-, Acyloxy- und Acylaminoalkansulfonate, die ebenfalls bevorzugt in Form ihrer wasserlöslichen Natriumsalze eingesetzt werden.

Bevorzugt sind dabei die Arylsulfonate, wobei die Di-(C₁-C₈-alkyl)naphthalinsulfonate besonders bevorzugt sind. Ganz besonders bevorzugt sind Diisobutyl- und Diisopropylnaphthalinsulfonat.

Derartige anionische oberflächenaktive Additive sind bekannt und im Handel z.B. unter den Namen Crodafos® (Croda), Rhodafac^{®} (Rhodia), Maphos^{®} (BASF), Texapon^{®} (Cognis), Empicol^{®} (Albright & Wilson), Matexil^{®} (ICI), Soprophor^{®} (Rhodia), Lutensit^{®} (BASF), Nekal^{®} (BASF) und-Tamol^{®} (BASF) erhältlich.

Die erfindungsgemäßen Pigmentzubereitungen enthalten 14,9 bis 34,9 Gew.%, vorzugsweise 17 bis 25 Gew.%, des oberflächenaktiven Additivs (C). Wie bereits erwähnt, kann sich ein nichtionisches Additiv (C) mit zur Salzbildung befähigtem basischen Zentrum mit nichtneutralisiertem Pigmentderivat (B) zum Salz umsetzen. In diesem Fall ist darauf zu achten, daß die Pigmentzubereitung, noch freies Additiv (nichtionisches und/oder anionisches Additiv (C)) enthält. Bevorzugt liegen mindestens 5 Gew.-% Additiv (C) in freier Form vor.

Die erfindungsgemäßen Pigmentzubereitungen können nur nichtionisches Additiv (C), nur anionisches Additiv (C) oder Mischungen von nichtionischem und anionischem Additiv (C) enthalten. Beispielsweise können anionische Additive auf Basis der bevorzugten Phosphorsäure- und Schwefelsäureester nichtionischer Polyether in reiner Form oder in Mischungen mit nichtionischen und/oder weiteren anionischen Additiven (C) eingesetzt werden. Der Anteil der Ester an diesen Mischungen kann dabei 5 bis 90 Gew.-% betragen. Auf Arylsulfonaten basierende anionische Additive (C) kommen vorzugsweise in Mischung mit nichtionischen und/oder weiteren anionischen Additiven (C) zum Einsatz, wobei ihr Anteil an den Mischungen in der Regel bei 5 bis 20 Gew.-% liegt.

Die erfindungsgemäßen Pigmentzubereitungen können vorteilhaft nach dem ebenfalls erfindungsgemäßen Herstellungsverfahren erhalten werden, indem man das Pigment (A) zunächst in wäßriger, zumindest eine Teilmenge, vorzugsweise aber die Gesamtmenge Additiv (C) enthaltender Suspension einer Naßzerkleinerung unterwirft und die Suspension dann, gegebenenfalls nach Zugabe der restlichen Menge Additiv (C), trocknet.

Das Pigmentderivat (B) kann man der Suspension dabei vor, während oder nach der Naßzerkleinerung, gewünschtenfalls auch zu verschiedenen Zeitpunkten in Teilmengen, zusetzen. Bevorzugt gibt man zumindest eine Teilmenge, vorzugsweise aber die Gesamtmenge des Pigmentderivats (B) vor der Naßzerkleinerung zu. Man kann auch so verfahren, daß man einer Suspension des Pigmente (A) das Pigmentderivat (B) zusetzt, das mit dem Pigmentderivat (B) belegte Pigment abfiltriert und den feuchten Preßkuchen, gegebenenfalls nach teilweiser oder völliger Trocknung, der Naßzerkleinerung zuführt.

Das Pigment (A) kann bei dem erfindungsgemäßen Verfahren als trockenes Pulver oder in Form eines Preßkuchens eingesetzt werden. Bei dem eingesetzten Pigment (A) handelt es sich bevorzugt um ein gefinishtes Produkt, d.h. die Primärkorngröße des Pigments ist bereits auf den für die Anwendung gewünschten Wert eingestellt. Dieser Pigmentfinish, der auch in Gegenwart des Pigmentderivats (B) durchgeführt werden kann, muß insbesondere bei organischen Pigmenten durchgeführt werden, da die bei der Pigmentsynthese anfallende Rohware nicht für die Anwendung geeignet ist. Da das gefinishte Pigment (A) bei der Trocknung bzw. auf dem Filteraggregat üblicherweise wieder reagglomeriert, wird es in wäßriger Suspension einer Naßzerkleinerung, z.B. einer Mahlung in einer Rührwerkskugelmühle, unterzogen.

Die Naßzerkleinerung kann bei verschiedenen pH-Werten durchgeführt werden. Für die Trocknung sollte die Suspension jedoch einen pH-Wert von annähernd 7 aufweisen, also neutralisiert sein. In der Regel (insbesondere bei Einsatz der Pigmentderivate (B) in Form der freien Säure) wird hierzu die Zugabe einer Base, insbesondere von Natronlauge, vor oder nach der Naßzerkleinerung erforderlich sein. Vorzugsweise wird die Base jedoch vor der Naßzerkleinerung zugegeben.

In Abhängigkeit von der gewählten Trocknungsart - Sprühgranulierung und Wirbelschichttrocknung, Sprühtrocknung, Trocknung im Schaufeltrockner, Eindampfen und anschließende Zerkleinerung - kann die Teilchengröße der erfindungsgemäßen Pigmentzubereitungen gezielt gesteuert werden. Es kann dabei sowohl an der Luft als auch unter Inertgas, bevorzugt Stickstoff, gearbeitet werden.

Bei Sprüh- und Wirbelschichtgranulierung können grobteilige Granulate mit mittleren Korngrö-ßen von 50 bis 5000 µm, insbesondere 100 bis 1000 µm, erhalten werden. Durch Sprühtrocknung werden üblicherweise Granulate mit mittleren Korngrößen < 20 µm erhalten. Feinteilige Zubereitungen können bei der Trocknung im Schaufeltrockner und beim Eindampfen mit anschließender Mahlung erhalten werden. Vorzugsweise liegen die erfindungsgemäßen Pigmentzubereitungen jedoch in Granulatform vor.

Die Sprühgranulierung führt man vorzugsweise in einem Sprühturm mit Einstoffdüse durch. Die Suspension wird hier in Form größerer Tropfen versprüht, wobei das Wasser verdampft. Das Additiv (C) schmilzt bei den Trocknungstemperaturen auf und führt so zur Bildung eines weitgehend kugelförmigen Granulats mit besonders glatter Oberfläche (BET-Werte von in der Regel ≤ 15 m²/g, insbesondere von ≤ 10 m²/g).

Die Gaseintrittstemperatur im Sprühturm liegt im allgemeinen bei 180 bis 300°C, bevorzugt bei 150 bis 300°C. Die Gasaustrittstemperatur beträgt in der Regel 70 bis 150°C, vorzugsweise 70 bis 130°C.

Die Restfeuchte des erhaltenen Pigmentgranulats liegt bevorzugt bei < 2 Gew.-%.

Die erfindungsgemäßen Pigmentzubereitungen zeichnen sich bei der Anwendung durch ihre hervorragenden, den flüssigen Pigmentpräparationen vergleichbaren, koloristischen Eigenschaften, insbesondere ihre Farbstärke und Brillanz, ihren Farbton und ihr Deckvermögen, und vor allem durch ihr Stir-in-Verhalten aus, d.h. sie können mit sehr geringem Energieeintrag durch einfaches Einrühren oder Schütteln in den Anwendungsmedien verteilt werden. Dies gilt insbesondere für die grobteiligen Pigmentgranulate, die die bevorzugte Ausführungsform der erfindungsgemäßen Pigmentzubereitungen darstellen.

Im Vergleich zu flüssigen Pigmentpräparationen weisen die erfindungsgemäßen Pigmentzubereitungen zudem folgende Vorteile auf: Sie haben einen höheren Pigmentgehalt. Während flüssige Präparationen bei der Lagerung zu Viskositätsänderungen neigen und mit Konservierungsmitteln und Mitteln zur Erhöhung der Gefrier- und/oder Eintrocknungsbeständigkeit versetzt werden müssen, zeigen die erfindungsgemäßen Pigmentzubereitungen sehr gute Lagerstabilität. Sie sind hinsichtlich Verpackung, Lagerung und Transport wirtschaftlich und ökologisch vorteilhaft. Da sie lösungsmittelfrei sind, weisen sie höhere Flexibilität in der Anwendung auf.

Die erfindungsgemäßen Pigmentzubereitungen in Granulatform zeichnen sich durch ausgezeichnete Abriebfestigkeit, geringe Kompaktierungs- bzw. Verklumpungsneigung, gleichmäßige Kornverteilung, gute Schütt-, Riesel- und Dosierfähigkeit sowie Staubfreiheit bei Handling und Applikation aus.

Die erfindungsgemäßen Pigmentzubereitungen eignen sich hervorragend zur Einfärbung von hochmolekularen organischen und anorganischen Materialien jeglicher Art. Flüssige Anwendungsmedien können dabei auch rein wäßrig sein, Mischungen von Wasser und organischen Lösungsmitteln, z.B. Alkoholen, enthalten oder nur auf organischen Lösungsmitteln, wie Alkoholen, Glykolethern, Ketonen, z.B. Methylethylketon, Amiden, z.B. N-Methylpyrrolidon und Dimethylformamid, Estern, z.B. Essigsäureethyl- und -butylester und Methoxypropylacetat, aromatischen oder aliphatischen Kohlenwasserstoffen, z.B. Xylol, Mineralöl und Benzin, basieren.

Gewünschtenfalls können die Zubereitungen zunächst in ein mit dem jeweiligen Anwendungsmedium verträgliches Lösungsmittel eingerührt werden, was wiederum mit sehr geringem Energieeintrag möglich ist, und dann in dieses Anwendungsmedium eingetragen werden. So können z.B. Aufschlämmungen von Pigmentzubereitungen in Glykolen oder sonstigen in der Lackindustrie üblichen Lösungsmitteln, wie Methoxypropylacetat, verwendet werden, um auf wäßrige Systeme abgestimmte Pigmentzubereitungen mit kohlenwasserstoffbasierenden Systemen oder Systemen auf Nitrocellulosebasis verträglich zu machen.

Als Beispiele für Materialien, die mit den erfindungsgemäßen Pigmentzubereitungen eingefärbt werden können, seien genannt: Lacke, z.B. Bautenlacke, Industrielacke, Fahrzeuglacke, strahlungshärtbare Lacke; Anstrichmittel, sowohl für den Bautenaußen- als auch -innenbereich, z.B. Holzanstrichmittel, Kalkfarben, Leimfarben, Dispersionsfarben; Druckfarben, z.B. Offsetdruckfarben, Flexodruckfarben, Toluoltiefdruckfarben, Textildruckfarben, strahlungshärtbare Druckfarben; Tinten, auch Ink-Jet-Tinten; Colorfilter; Baustoffe (üblicherweise wird erst nach trockenem Vermischen von Baustoff und Pigmentgranulat Wasser zugesetzt), z.B. Silikatputzsysteme, Zement, Beton, Mörtel, Gips; Asphalt, Dichtungsmassen; cellulosehaltige Materialien, z.B. Papier, Pappe, Karton, Holz und Holzwerkstoffe, die lackiert oder anderweitig beschichtet sein können; Klebstoffe; filmbildende polymere Schutzkolloide, wie sie beispielsweise in der Pharmaindustrie verwendet werden; kosmetische Artikel; Detergentien.

Besonders vorteilhaft können die erfindungsgemäßen Pigmentzubereitungen als Mischkomponenten in Farbmisch- oder Abtönsystemen eingesetzt werden. Aufgrund ihres Stir-in-Verhaltens können sie dabei direkt als Feststoff zum Einsatz kommen. Gewünschtenfalls können sie jedoch auch zunächst in Abtönfarben (Farben mit hohem Feststoffgehalt, "HS-Farben") oder noch höher pigmentierte Abtönpasten überführt werden, die dann die Komponenten des Mischsystems darstellen. Die Einstellung des gewünschten Farbtons und damit die Mischung der Farbkomponenten kann visuell über ein System von Farbkarten in möglichst vielen Farbtonabstufungen, die auf Farbstandards, wie RAL, BS und NCS, basieren, erfolgen oder bevorzugt computergesteuert vorgenommen werden, wodurch eine unbegrenzte Anzahl von Farbtönen zugänglich ist ("computer color matching").

Die erfindungsgemäßen Pigmentzubereitungen sind auch hervorragend zur Einfärbung von Kunststoffen geeignet. Beispielhaft seien hier folgende Kunststoffklassen und Kunststofftypen genannt:
- abgewandelte Naturstoffe:
   Duroplaste, z.B. Casein-Kunststoffe; Thermoplaste, z.B. Cellulosenitrat, Celluloseacetat, Cellulosemischester und Celluloseether;
- synthetische Kunststoffe:
   Polykondensate: Duroplaste, z.B. Phenolharz, Harnstoffharz, Thioharnstoffharz, Melaminharz, ungesättigtes Polyesterharz, Allylharz, Silicon, Polyimid und Polybenzimidazol; Thermoplaste, z.B. Polyamid, Polycarbonat, Polyester, Polyphenylenoxid, Polysulfon und Polyvinylacetal;
   Polymerisate: Thermoplaste, z.B. Polyolefine, wie Polyethylen, Polypropylen, Poly-1-buten und Poly-4-methyl-1-penten, lonomere, Polyvinylchlorid, Polyvinylidenchlorid, Polymethylmethacrylat, Polyacrylnitril, Polystyrol, Polyacetal, Fluorkunststoffe, Polyvinylalkohol, Polyvinylacetat und Poly-p-xylylen sowie Copolymere, wie Ethylen/Vinylacetat-Copolyrnere, Styrol/Acrylnitril-Copolymere, Acrylnitril/Butadien/Styrol-Copolymere, Polyethylenglykolterephthalat und Polybutylenglykolterephthalat;
   Polyaddukte: Duroplaste, z.B. Epoxidharz und vernetzte Polyurethane; Thermoplaste, z.B. lineare Polyurethane und chlorierte Polyether.

Die Kunststoffe können vorteilhaft unter geringem Energieeintrag, z.B. durch gemeinsames Extrudieren (vorzugsweise mit einem Ein- oder Zweischneckenextruder), Walzen, Kneten oder Mahlen, mit den erfindungsgemäßen Pigmentzubereitungen eingefärbt werden. Sie können dabei als plastische Massen oder Schmelzen vorliegen und zu Kunststofformkörpern, Folien und Fasern verarbeitet werden.

Die erfindungsgemäßen Pigmentzubereitungen zeichnen sich auch bei der Kunststoffeinfärbung durch insgesamt vorteilhafte Anwendungseigenschaften, vor allem gute koloristische Eigenschaften, insbesondere hohe Farbstärke und Brillanz, und die guten rheologischen Eigenschaften der mit ihnen eingefärbten Kunststoffe, insbesondere niedrige Druckfilterwerte (hohe Filterstandszeiten) und gute Verspinnbarkeit, aus.

### Beispiele

### Herstellung und Prüfung von erfindungsgemäßen Pigmentzubereitungen in Granulatform

Die Herstellung der Pigmentzubereitungen erfolgte, indem eine Suspension von x kg gefinishtem Pigment (A), y kg Pigmentderivat (B) und z kg gegebenenfalls mehrerer Additive (C) in 150 kg Wasser, erforderlichenfalls durch Zugabe von 25 gew.-%iger Natronlauge auf einen pH-Wert von 7 eingestellt, in einer Kugelmühle auf einen d₅₀-Wert von < 1 µm gemahlen und dann in einem Sprühturm mit Einstoffdüse (Gaseintrittstemperatur 165°C, Gasaustrittstemperatur 70°C) sprühgranuliert wurde.

In den Beispielen 39 bis 41 wurde das Pigment (A) zunächst in wäßriger Suspension bei einem pH-Wert von 8 mit dem Pigmentderivat (B) belegt, das belegte Pigment wurde abfiltriert, und der Preßkuchen dann (in Beispiel 41 nach vorheriger Trocknung) der Mahlung in Gegenwart des Additivs (C) zugeführt.

Die Bestimmung der Farbstärke der Pigmentgranulate erfolgte farbmetrisch in der Weißaufhellung (Angabe der Färbeäquivalente FAE, DIN 55986) in einer wasserbasierenden Dispersionsfarbe. Dazu wurde eine Mischung von jeweils 1,25 g Pigmentgranulat und 50 g eines wasserbasierenden Prüfbinders auf Styrol/Acrylatbasis mit einem Weißpigmentgehalt von 16,4 Gew.-% (TiO₂, Kronos 2043) (Prüfbinder 00-1067, BASF) in einem 150 ml-Kunststoffbecher mit einem Schnellrührer 3 min bei 1500 U/min homogenisiert. Die erhaltene Farbe wurde dann mit einer 100 µm-Spiralrakel auf schwarz/weißen Prüfkarton aufgezogen und 30 min getrocknet.

Den jeweils analogen Dispersionsfarben, die mit handelsüblichen wäßrigen Präparationen der Pigmente hergestellt wurden, wurde der FAE-Wert 100 (Standard) zugeordnet. FAE-Werte < 100 bedeuten eine höhere Farbstärke als beim Standard, FAE-Werte > 100 entsprechend eine kleinere Farbstärke.

Die erhaltenen Pigmentgranulate zeigten hervorragende Lagerstabilität.

In der folgenden Tabelle sind die Zusammensetzungen der hergestellten Pigmentzubereitungen sowie die jeweils erhaltenen FAE-Werte aufgeführt.

Als Pigmentderivate (B) wurden dabei eingesetzt:
- B1:: Chinophthalonsulfonsäure (Ia) (WO-A-02/00643, Beispiel 1)
- B2:: CuPc-Sulfonsäure (Ib) mit einem Substitutionsgrad von ca. 1,4
- B3:: CuPc-Sulfonsäure (Ib) mit einem Substitutionsgrad von ca. 1,7
- B4:: Monolaurylammoniumsalz einer CuPc-Sulfonsäure (Ib) mit einem Substitutionsgrad von ca. 1,4 (analog GB-A-1 508 576, Agens A)
- B5:: Dimethyldistearylammoniumsalz einer CuPc-Sulfonsäure (Ib) mit einem Substitutionsgrad von ca. 1,4 (analog GB-A-1 508 576, Agens B)
- B6:: Umsetzungsprodukt einer CuPc-Sulfonsäure mit einem Substitutionsgrad von ca. 1,7 mit 0,6 mol Laurylammoniumchlorid

Als Additive (C) wurden dabei eingesetzt:
- C1:: Ethoxylierter C₁₃/C₁₅-Oxoalkohol mit einem durchschnittlichen Ethoxylierungsgrad von 30
- C2:: Ethoxylierter linearer gesättigter C₁₆/C₁₈-Fettalkohol mit einem durchschnittlichen Ethoxylierungsgrad von 25
- C3:: Ethoxylierter linearer gesättigter C₁₆/C₁₈-Fettalkohol mit einem durchschnittlichen Ethoxylierungsgrad von 50
- C4:: Blockcopolymer auf Basis Ethylendiamin/Propylenoxid/Ethylenoxid mit einem Ethylenoxidgehalt von 40 Gew.-% und einem mittleren Molekulargewicht Mₙ von 12 000
- C5:: Blockcopolymer auf Basis Ethylendiamin/Propylenoxid/Ethylenoxid mit einem Ethylenoxidgehalt von 40 Gew.-% und einem mittleren Molekulargewicht Mₙ von 6700
- C6:: Ethoxylierter gesättigter Isotridecylalkohol mit einem durchschnittlichen Ethoxylierungsgrad von 20
- C7:: Propylenoxid/Ethylenoxid-Copolymer mit zentralem Polypropylenoxidblock, einem Ethylenoxidgehalt von 50 Gew.-% und einem mittleren Molekulargewicht Mₙ von 6500
- C8:: Ethoxyliertes Bisphenol A mit einem durchschnittlichen Ethoxylierungsgrad von 7
- C9:: Natriumsalz eines halbsulfatierten ethoxylierten tetraphenylethylsubstituierten Bisphenols A (70 mol EO/mol Bisphenol A) (US-A-4 218 218, Dispergiermittel 13)
- C10:: Saurer Phosphorsäureester auf Basis eines zunächst propoxylierten und dann ethoxylierten C₈/C₁₀-Oxoalkohols (12 mol PO und 6 mol EO/mol Oxoalkohol)
- C11:: Düsobutylnaphthalinsulfonsäure-Natriumsalz

**Tabelle**

| Bsp. | Pigment | | Pigmentderivat | | Additive | | | | | | FAE |
|---|---|---|---|---|---|---|---|---|---|---|---|
| | (A) | x kg | (B) | y kg | (C) | z' kg | (C) | z" kg | (C) | z"' kg | |
| 1 | P.R. 112 | 75,0 | B1 | 2,0 | C1 | 23,0 | | | | | 100 |
| 2 | P.R. 112 | 75,0 | B1 | 2,0 | C2 | 23,0 | | | | | 107 |
| 3 | P.R. 112 | 75,0 | B1 | 2,0 | C3 | 23,0 | | | | | 101 |
| 4 | P.R. 112 | 78,0 | B1 | 2,0 | C4 | 10,0 | C6 | 10,0 | | | 103 |
| 5 | P.R. 112 | 75,0 | B1 | 2,0 | C4 | 23,0 | | | | | 104 |
| 6 | P.R. 112 | 75,0 | B1 | 2,0 | C7 | 23,0 | | | | | 97 |
| 7 | P.R. 112 | 74,0 | B1 | 3,0 | C7 | 23,0 | | | | | 99 |
| 8 | P.R. 112 | 73,0 | B1 | 2,0 | C9 | 25,0 | | | | | 98 |
| 9 | P.R. 112 | 73,0 | B1 | 2,0 | C6 | 10,0 | C4 | 15,0 | | | 105 |
| 10 | P.R. 112 | 76,0 | B1 | 4,0 | C6 | 10,0 | C4 | 10,0 | | | 101 |
| 11 | P.R. 112 | 75,0 | B1 | 2,0 | C6 | 23,0 | | | | | 99 |
| 13 | P.Y. 74 | 73,1 | B1 | 1,5 | C1 | 22,9 | C11 | 2,6 | | | 80 |
| 14 | P.Y. 74 | 76,4 | B1 | 1,6 | C1 | 20,0 | C9 | 2,0 | | | 98 |
| 15 | P.Y. 74 | 73,5 | B1 | 1,5 | C2 | 25,0 | | | | | 98 |
| 16 | P.Y. 74 | 75,9 | B1 | 1,6 | C2 | 19,9 | C11 | 2,6 | | | 95 |
| 17 | P.Y. 74 | 72,8 | B1 | 2,3 | C2 | 24,0 | C11 | 1,0 | | | 90 |
| 18 | P.Y. 74 | 73,5 | B1 | 1,5 | C3 | 25,0 | | | | | 105 |
| 19 | P.Y. 74 | 74,5 | B1 | 1,5 | C3 | 23,0 | C11 | 1,0 | | | 93 |
| 20 | P.Y. 74 | 77,2 | B1 | 0,8 | C4 | 19,5 | C11 | 2,5 | | | 88 |
| 21 | P.Y. 74 | 78,4 | B1 | 1,6 | C4 | 10,0 | C1 | 10,0 | | | 102 |
| 22 | P.Y. 74 | 78,4 | B1 | 1,6 | C4 | 10,0 | C6 | 10,0 | | | 102 |
| 23 | P.Y. 74 | 78,4 | B1 | 1,6 | C7 | 10,0 | C1 | 5,0 | C6 | 5,0 | 105 |
| 24 | P.V. 23 | 73,5 | B3 | 1,5 | C4 | 25,0 | | | | | 103 |
| 25 | P.V. 23 | 73,5 | B3 | 1,5 | C8 | 25,0 | | | | | 98 |
| 26 | P.Y. 138 | 82,5 | B1 | 0,5 | C7 | 17,0 | | | | | 92 |
| 27 | P.Y. 138 | 79,0 | B1 | 1,0 | C7 | 5,0 | C10 | 15,0 | | | 101 |
| 28 | P.Y. 138 | 79,0 | B1 | 1,0 | C7 | 15,0 | C10 | 5,0 | | | 91 |
| 29 | P.B. 15 | 75,1 | B4 | 4,9 | C4 | 20,0 | | | | | 93 |
| 30 | P.B. 15:1 | 75,0 | B4 | 5,0 | C2 | 20,0 | | | | | 101 |
| 31 | P.B. 15:1 | 75,0 | B4 | 5,0 | C4 | 20,0 | | | | | 97 |
| 32 | P.B. 15:1 | 73,1 | B4 | 3,9 | C4 | 23,0 | | | | | 106 |
| 33 | P.B. 15:1 | 76,0 | B3 | 4,0 | C4 | 20,0 | | | | | 104 |
| 34 | P.B. 15:1 | 76,0 | B2 | 4,0 | C4 | 20,0 | | | | | 105 |
| 35 | P.B. 15:1 | 72,1 | B5 | 5,4 | C4 | 22,5 | | | | | 100 |
| 36 | P.B. 15:2 | 72,7 | B2 | 4,5 | C4 | 22,7 | | | | | 102 |
| 37 | P.B.15:2 | 70,3 | B4 | 4,7 | C4 | 25,0 | | | | | 102 |
| 38 | P.B.15:2 | 75,0 | B4 | 5,0 | C4 | 20,0 | | | | | 93 |
| 39 | P.B.15:2 | 75,0 | B6 | 5,0 | C4 | 20,0 | | | | | 102 |
| 40 | P.B. 15:2 | 75,0 | B3 | 5,0 | C4 | 19,9 | | | | | 98 |
| 41 | P.B. 15:2 | 75,0 | B3 | 5,0 | C4 | 20,0 | | | | | 98 |
| 42 | P.O. 67 | 76,0 | B1 | 2,0 | C4 | 22,0 | | | | | 88 |
| 43 | P.O. 67 | 76,0 | B1 | 2,0 | C5 | 22,0 | | | | | 93 |
| 44 | P.O. 67 | 75,0 | B1 | 3,0 | C5 | 22,0 | | | | | 93 |
| 45 | P.O. 67 | 75,0 | B1 | 3,0 | C3 | 22,0 | | | | | 91 |
| 46 | P.O. 67 | 76,0 | B1 | 2,0 | C8 | 22,0 | | | | | 84 |

## Patentansprüche

1. Feste Pigmentzubereitungen, enthaltend als wesentliche Bestandteile
(A) 60 bis 85 Gew.-% mindestens eines organischen Pigments,
(B) 0,1 bis 15 Gew.-% mindestens eines Pigmentderivats der allgemeinen Formel Ia 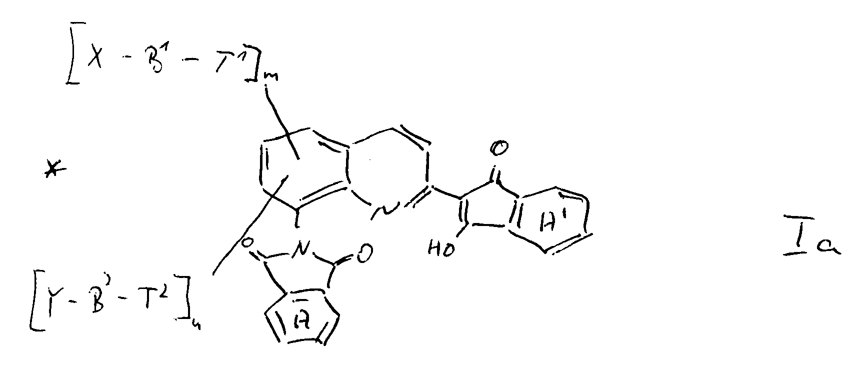 oder Formel Ib 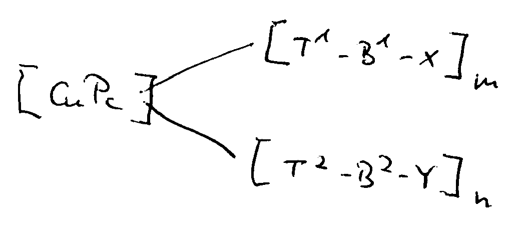
in der die Variablen folgende Bedeutung haben:
T¹, T² unabhängig voneinander eine chemische Bindung, -CONR¹- oder -SO₂NR¹-;
B¹, B² unabhängig voneinander eine chemische Bindung, C₁-C₈-Alkylen oder Phenylen;
X, Y unabhängig voneinander gleiche oder verschiedene Gruppen -SO₃⁻ Ka⁺;
m, n eine rationale Zahl von 0 bis 3, wobei 1 ≤ m+n ≤ 4 ist;
Ka⁺ H⁺, Li⁺, Na⁺, K⁺,N⁺R²R³R⁴R⁵ oder ein Gemisch dieser Kationen;
R¹ Wasserstoff; C₁-C₄-Alkyl; Phenyl oder Naphthyl, das jeweils durch C₁-C₁₈-Alkyl substituiert sein kann;
R², R³, R⁴, R⁵ unabhängig voneinander Wasserstoff; C₁-C₃₀-Alkyl; C₃-C₃₀-Alkenyl; C₅-C₆-Cycloalkyl, das durch C₁-C₂₄-Alkyl substituiert sein kann; Phenyl oder Naphthyl, das jeweils durch C₁-C₂₄-Alkyl oder C₂-C₂₄-Alkenyl substituiert sein kann; einen Rest der Formel -[CHR⁶-CHR⁷-O]ₓ-R⁸, bei dem die Wiederholungseinheiten -[CHR⁶-CHR⁷-O] für x > 1 variieren können;
R⁶, R⁷, R⁸ unabhängig voneinander Wasserstoff oder C₁-C₆-Alkyl;
x eine ganze Zahl ≥ 1,
A und A' gleiche oder verschiedene Ringe, die durch jeweils 1 bis 4 1 bis 4 Chlor- und/oder Fluoratome substituiert sein können.
(C) 14,9 bis 39,9 Gew.-% mindestens eines oberflächenaktiven Additivs aus der Gruppe der nichtionischen, keine primären Aminogruppen enthaltenden Polyether, ihrer sauren Phosphorsäure-, Phosphonsäure-, Schwefelsäure- und/oder Sulfonsäureester, der Salze dieser Ester und der Alkyl- und Alkylarylsulfonsäuren, ihrer Salze und ihrer Kondensationsprodukte mit Formaldehyd.

2. Pigmentzubereitungen nach Anspruch 1, die in Form von Granulaten mit einer mittleren Korngröße von 50 bis 5000 µm und einer BET-Oberfläche von ≤ 15 m²/g vorliegen.

3. Pigmentzubereitungen nach Anspruch 1 oder 2, die als Komponente (C) mindestens ein Additiv aus der Gruppe der Alkylenoxidblockcopolymere, der Umsetzungsprodukte von Alkyenoxiden mit Alkoholen, Aminen, aliphatischen Carbonsäuren oder Carbonsäureamiden, der sauren Phosphorsäure-, Phosphonsäure-, Schwefelsäure- und Sulfonsäureester dieser Alkylenoxidverbindungen, der Salze dieser Ester und der Alkylphenyl- und Alkylnaphthalinsulfonsäuren, ihrer Salze und ihrer Kondensationsprodukte mit Formaldehyd enthalten.

4. Verfahren zur Herstellung von Pigmentzubereitungen gemäß den Ansprüchen 1 bis 3, **dadurch gekennzeichnet, daß** man das Pigment (A) zunächst in wäßriger, zumindest einen Teil des Additivs (C) enthaltender Suspension, gewünschtenfalls nach Zugabe eines Teils oder der Gesamtmenge Pigmentderivat (B) sowie gewünschtenfalls vorheriger oder nachheriger Neutralisation der Suspension mit einer Base, einer Naßzerkleinerung unterwirft und die Suspension dann, gegebenenfalls nach Zugabe der restlichen Menge Pigmentderivat (B) und Additiv (C), trocknet.

5. Verfahren zur Einfärbung von hochmolekularen organischen und anorganischen Materialien, **dadurch gekennzeichnet, daß** man Pigmentzubereitungen gemäß den Ansprüchen 1 bis 3 durch Einrühren oder Schütteln in diese Materialien einträgt.

6. Verfahren nach Anspruch 5, **dadurch gekennzeichnet, daß** man Lacke, Anstrichmittel, Druckfarben, Tinten und Beschichtungssysteme einfärbt, die als flüssige Phase Wasser, organische Lösungsmittel oder Mischungen von Wasser und organischen Lösungsmitteln enthalten.

7. Verfahren zur Einfärbung von hochmolekularen organischen und anorganischen Materialien unter Verwendung von Farbmischsystemen, **dadurch gekennzeichnet, daß** man Pigmentzubereitungen gemäß den Ansprüchen 1 bis 3 als Mischkomponenten einsetzt.

8. Verfahren zur Einfärbung von Kunststoffen, **dadurch gekennzeichnet, daß** man Pigmentzubereitungen gemäß den Ansprüchen 1 bis 3 durch Extrudieren, Walzen, Kneten oder Mahlen in die Kunststoffe einarbeitet.

## Claims

1. Solid pigment preparations comprising as essential constituents
(A) from 60% to 85% by weight of at least one organic pigment,
(B) from 0.1 % to 15% by weight of at least one pigment derivative of the general formula Ia 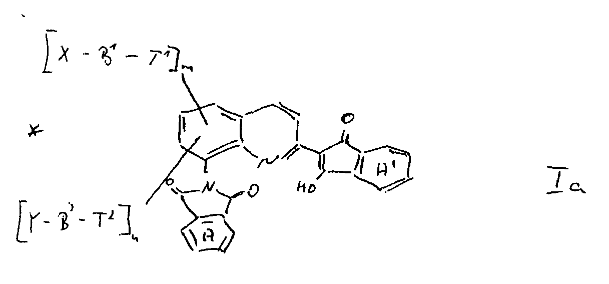 or formula Ib 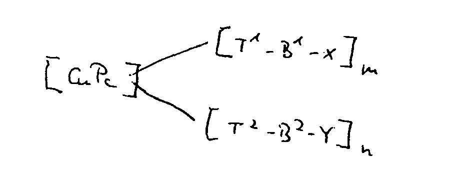 where
A and A' are identical or different rings which may each be substituted by from 1 to 4 chlorine and/or fluorine atoms.
T¹ and T² are independently a chemical bond, -CONR¹- or -SO₂NR¹-;
B¹ and B² are independently a chemical bond, C₁-C₈-alkylene or phenylene;
X and Y independently represent identical or different groups -SO₃⁻Ka⁺
m and n are each a rational number from 0 to 3 subject to the proviso that 1≤m+n≤4;
Ka⁺ is H⁺, Li⁺, Na⁺, K⁺, N⁺R²R³R⁴R⁵ or a mixture thereof;
R¹ is hydrogen; C₁-C₄-alkyl; unsubstituted or C₁-C₁₈-alkyl-substituted phenyl; or unsubstituted or C₁-C₁₈-alkyl-substituted naphthyl;
R², R³, R⁴ and R⁵ are independently hydrogen; C₁-C₃₀-alkyl; C₃-C₃₀-alkenyl; C₅-C₆-cycloalkyl, unsubstituted or C₁-C₂₄-alkyl-substituted; unsubstituted or C₁-C₂₄-alkyl- or C₂-C₂₄-alkenyl-substituted phenyl; unsubstituted or C₁-C₂₄-alkyl- or C₂-C₂₄-alkenyl-substituted naphthyl; a radical of the formula -[CHR⁶-CHR⁷-O]ₓ-R⁸ where the repeat units -[CHR⁶-CHR⁷-O] can vary for x > 1;
R⁶, R⁷ and R⁸ are independently hydrogen or C₁-C₆-alkyl;
x is an integer ≥ 1,
and
(C) from 14.9% by weight to 39.9% by weight of at least one surface-active additive selected from the group consisting of the nonionic polyethers comprising no primary amino group, said polyethers' acidic phosphoric, phosphonic, sulfuric and/or sulfonic esters, the salts of these esters and the alkyl- and alkylarylsulfonic acids, their salts and their condensation products with formaldehyde.

2. The pigment preparations as claimed in claim 1 in the form of granules having an average particle size from 50 to 5 000 µm and a BET surface area of ≤ 15 m²/g.

3. The pigment preparations as claimed in claim 1 or 2 wherein component (C) is at least one additive selected from the group consisting of the alkylene oxide copolymers, the reaction products of alkylene oxides with alcohols, amines, aliphatic carboxylic acids or carboxamides, the acidic phosphoric, phosphonic, sulfuric and sulfonic esters of these alkylene oxide compounds, the salts of these esters and the alkylphenyl- and alkylnaphthalenesulfonic acids, their salts and their condensation products with formaldehyde.

4. A process for producing pigment preparations as claimed in claims 1 to 3, which comprises wet-comminuting the pigment (A) in aqueous suspension which comprises some or all of additive (C), if desired after addition of some or all of pigment derivative (B) and also, if desired, prior or subsequent neutralization of the suspension with a base, and then drying the suspension, if appropriate after the rest of pigment derivative (B) and additive (C) has been added.

5. A process for coloration of macromolecular organic and inorganic materials, which comprises incorporating pigment preparations as claimed in claims 1 to 3 in these materials by stirring or shaking.

6. The process as claimed in claim 5 for coloration of coatings, paints, inks, including printing inks, and finish systems where the liquid phase comprises water, organic solvents or mixtures of water and organic solvents.

7. A process for coloration of macromolecular organic and inorganic materials using color-mixing systems, which comprises using pigment preparations as claimed of claims 1 to 3 as mixing components.

8. A process for coloration of plastics, which comprises incorporating pigment preparations as claimed in claims 1 to 3 in the plastics by extruding, rolling, kneading or milling.

## Revendications

1. Préparations pigmentées solides qui contiennent comme composants essentiels :
(A) de 60 à 85 % en poids d'au moins un pigment organique,
(B) de 0,1 à 15 % en poids d'au moins un dérivé pigmenté de formule générale Ia: 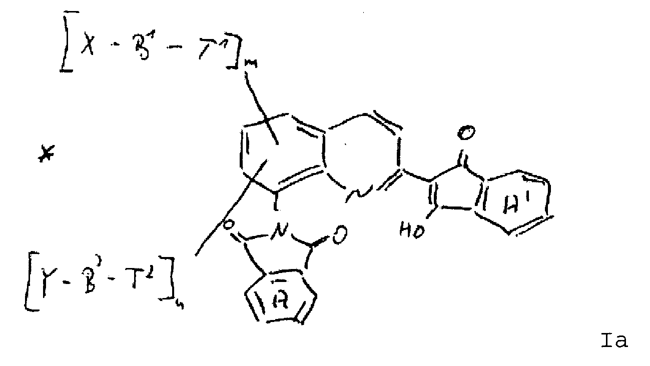 ou de formule Ib : 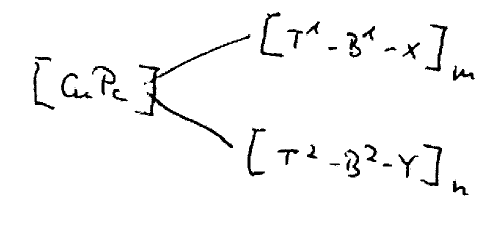 dans lesquelles les variables ont les significations suivantes :
T¹, T² représentent indépendamment l'un de l'autre une liaison chimique, -CONR¹- ou -SO₂NR¹-,
B¹, B² représentent indépendamment l'un de l'autre une liaison chimique, un alkylène en C₁ à C₈ ou un phénylène,
X, Y représentent indépendamment l'un de l'autre des groupes -SO₃⁻Ka⁺ identiques ou différents,
m, n représentent un nombre rationnel compris entre 0 et 3, avec 1 ≤ m + n ≤ 4,
Ka⁺ représente H⁺, Li⁺, Na⁺, K⁺, N⁺R²R³R⁴R⁵ ou un mélange de ces cations,
R¹ représente l'hydrogène, un alkyle en C₁ à C₄, le phényle ou le naphtyle, chacun pouvant être substitué avec un alkyle en C₁ à C₁₈,
R², R³, R⁴, R⁵ représentent indépendamment les uns des autres l'hydrogène, un alkyle en C₁ à C₃₀, un alcényle en C₃ à C₃₀, un cycloalkyle en C₅ à C₆ qui peut être substitué avec un alkyle en C₁ à C₂₄, le phényle ou le naphtyle, chacun pouvant être substitué avec un alkyle en C₁ à C₂₄ ou un alcényle en C₂ à C₂₄, ou un groupe de formule - [CHR⁶-CHR⁷-O]ₓ-R⁸ dont les unités récurrentes -[CHR⁶-CHR⁷-O] peuvent être différentes lorsque x > 1,
R⁶, R⁷, R⁸ représentent indépendamment les uns des autres l'hydrogène ou un alkyle en C₁ à C₆,
x représente un nombre entier ≥ 1,
A et A' représentent des cycles identiques ou différents qui peuvent être substitués chacun avec 1 à 4 atomes de chlore et/ou de fluor,
(C) de 14,9 à 39,9 % en poids d'au moins un additif tensio-actif sélectionné dans l'ensemble constitué des polyéthers non ioniques qui ne contiennent pas de groupes amino primaires, leurs esters d'acide phosphorique, d'acide phosphonique, d'acide sulfurique et/ou d'acide sulfonique acides, les sels de ces esters et des acides alkylsulfoniques ou alkylarylsulfoniques, leurs sels et leurs produits de condensation avec le formaldéhyde.

2. Préparations pigmentées selon la revendication 1, qui se présentent sous la forme de granulés dont la granulométrie moyenne est de 50 à 5 000 um et la surface BET ≤ 15 m²/g.

3. Préparations pigmentées selon les revendications 1 ou 2, qui contiennent comme composants (C) au moins un additif sélectionné dans l'ensemble constitué des copolymères séquencés d'oxyde d'alkylène, des produits de conversion d'oxydes d'alkylène avec des alcools, des amines, des acides carboxyliques aliphatiques ou des amides d'acide carboxylique aliphatiques, des esters acides de l'acide phosphorique, l'acide phosphonique, l'acide sulfurique ou l'acide sulfonique de ces composés d'oxyde d'alkylène, des sels de ces esters, et des acides alkylphénylsulfoniques et alkylnaphtaline-sulfoniques, leurs sels et leurs produits de condensation avec le formaldéhyde.

4. Procédé de fabrication de préparations pigmentées selon les revendications 1 à 3, **caractérisé en ce que** l'on fait d'abord subir au pigment (A) un broyage en conditions humides dans une suspension aqueuse qui contient au moins une partie de l'additif (C), si on le souhaite après addition d'une partie ou de la quantité totale du dérivé pigmenté (B) et si on le souhaite en neutralisant préalablement ou ultérieurement la suspension avec une base, et **en ce que** l'on sèche ensuite la suspension, éventuellement après addition de la quantité restante de dérivé pigmenté (B) et d'additif (C).

5. Procédé de coloration de matériaux minéraux ou organiques à haut poids moléculaire, **caractérisé en ce que** par brassage ou secouage, on incorpore dans ces matériaux des préparations pigmentées selon les revendications 1 à 3.

6. Procédé selon la revendication 5, **caractérisé en ce que** l'on colore des vernis, des enduits, des encres d'impression, des encres et des systèmes de revêtement qui contiennent comme phase liquide de l'eau, des solvants organiques ou des mélanges d'eau et de solvants organiques.

7. Procédé de coloration de matériaux minéraux ou organiques à haut poids moléculaire par recours à des systèmes de mélange de coloration, **caractérisé en ce que** l'on utilise comme composants de mélange des préparations pigmentées selon les revendications 1 à 3.

8. Procédé de coloration de matières synthétiques, **caractérisé en ce que** l'on incorpore dans les matières synthétiques des préparations pigmentées selon les revendications 1 à 3, par extrusion, laminage, pétrissage ou broyage.
